# DEMANDE DE BREVET EUROPEEN

(11) **EP 2 939 880 A2**
(43) Date de publication de la demande: **04.11.2015**
(21) Numéro de dépôt: 15165016.5
(22) Date de dépôt: 24.04.2015
(51) Int. Cl.: B60R 7/04

(54) **AGENCEMENT D'UN ELEMENT DE RANGEMENT DE PAVILLON MOBILE SUIVANT UNE CINEMATIQUE CONJUGUEE DEPUIS L'ARRIERE D'UN VEHICULE**

(30) Priorité: 30.04.2014 FR 1453982
(71) Demandeur: PEUGEOT CITROËN AUTOMOBILES SA, 78140 Vélizy-Villacoublay (FR)
(72) Inventeur: Khodeir, Oussama, 75012 PARIS (FR); Rousseau, Frederic, 91410 DOURDAN (FR); Duvivier, Arnaud, 91120 PALAISEAU (FR); Copel, Johan, 94140 Alfortville (FR); Kervarec, Florian, 91310 LONGPONT SUR ORGE (FR)

(57) **Abrégé**

L'invention concerne un agencement (1) d'un élément de rangement (2) supporté par une structure porteuse (10) sous un pavillon (3), et au-dessus du plancher (8) de chargement de l'habitacle (4) d'un véhicule, et pour l'accès au dit élément (2) au moins une face par laquelle un utilisateur peut parvenir à l'intérieur dudit élément de rangement (2), caractérisé en ce que la structure porteuse (10) est mobile entre une position où elle est accolée au pavillon a une autre position où elle est distante dudit pavillon par des moyens mécanique rotatifs (9).

## Description

L'invention se situe dans le domaine de l'aménagement intérieur de véhicules de type breaks ou utilitaires en proposant un agencement d'un élément de rangement suspendu sous le pavillon permettant de stocker des objets divers sans encombrer le plancher de chargement du coffre, mobile suivant une cinématique conjuguée et extractible depuis l'arrière du véhicule.

Les habitacles des véhicules doivent offrir aux utilisateurs des espaces de rangement suffisamment grands pour permettre de transporter des objets plus ou moins encombrants. Les espaces susceptibles d'être disponibles pour créer des zones de rangement dans l'habitacle d'un véhicule sont peu nombreuses. Par conséquent, concevoir des zones de rangement dans l'espace sous le pavillon paraît être un bon compromis, pour proposer un compartiment de rangement le plus important possible tout en garantissant une sécurité optimale à ses utilisateurs en contenant le chargement de rangement de sorte à ce qu'il ne s'éjecte pas de manière intempestive dans l'habitacle.

Le document FR2872114 montre un exemple d'un agencement pour la fixation d'un élément de rangement sous un pavillon d'un habitacle de véhicule automobile et pour l'accès au dit élément de rangement, du type dans lequel l'élément de rangement comporte au moins une face par laquelle un utilisateur peut avoir accès à l'intérieur dudit élément de rangement et au moins deux parois opposées s'étendant entre deux extrémités de l'élément de rangement, qui portent deux paires de tourillons pour proposer au moins une configuration de rangement de l'élément de rangement dans laquelle les paires de tourillons occupent une position étendue, une configuration d'accès à l'intérieur de l'élément dans laquelle une seule paire de tourillons occupe la position étendue pour permettre de basculer l'élément de rangement afin d'y accéder. L'élément de rangement du fait des tourillons placés dans des orifices est difficile à positionner, et de plus pour accéder au rangement, l'utilisateur doit l'abaisser en le faisant tourner autour de son axe arrière ce qui oriente le fond du rangement dans une position oblique. On comprend que les objets déposés vont glisser tout en désordre vers la bordure du bas, voire chuté du rangement. Par conséquent, ce mode de rangement n'est pas idéal ni satisfaisant car il ne permet pas un rangement ordonné et une manipulation de l'élément de rangement pas évidente par l'utilisateur.

L'invention a pour objectif de résoudre les problèmes rencontrés dans l'art antérieur en proposant un nouvel agencement d'un élément de rangement dont l'accès est facilité, en conservant une position parallèle au plancher de chargement, tout en facilitant l'accès à l'utilisateur et en permettant l'enlèvement de l'élément de rangement de l'habitacle du véhicule.

A cet effet l'invention propose un agencement d'un élément de rangement supporté par une structure porteuse sous un pavillon, et au-dessus du plancher de chargement de l'habitacle d'un véhicule, et pour l'accès au dit élément au moins une face par laquelle un utilisateur peut parvenir à l'intérieur dudit élément de rangement, la structure porteuse étant mobile entre une position où elle est accolée au pavillon à une autre position où elle est distante dudit pavillon par des moyens rotatifs.

Avantageusement, la structure porteuse est mobile par des moyens rotatifs constitués d'une vis sans fin et d'une noix intégrée dans la structure porteuse. Ce qui permet de la déplacer sans effort.

Selon une variante, la structure porteuse est accompagnée au moins par un axe de guidage monté parallèlement aux moyens rotatifs, ce qui facilite le déplacement de l'élément de rangement vers l'arrière.

De manière optionnelle la structure porteuse est accompagnée au moins par un axe de guidage monté parallèlement aux moyens rotatifs, ce qui permet un bon maintien de l'élément de rangement.

Selon un mode de réalisation préféré de l'invention la vis sans fin est fixée sur la traverse avant de l'espace de chargement, ce qui assure une bonne tenue mécanique.

Selon une variante la vis sans fin est montée rotative et la noix est fixe, ce qui permet de l'approcher au plus près de l'utilisateur.

Selon une autre variante, la vis sans fin est fixe et la noix est montée rotative sur la structure porteuse.

Avantageusement, la vis sans fin ou la noix sont mis en rotation par une machine électrique.

De façon avantageuse, la structure porteuse comporte au moins un alésage dans la tranche de sa branche courte pour permettre le passage d'au moins un axe de guidage.

Selon une variante, la structure porteuse comporte sur sa branche longue une rainure en T apte à coopérer avec un tenon correspondant façonné sur le fond de l'élément de rangement.

Selon une autre variante, la structure porteuse comporte sur sa branche longue un guide rainuré en T, apte à coopérer avec un tenon surmontée de roue de guidage, montée sur le fond de l'élément de rangement.

L'invention sera bien comprise et d'autres aspects et avantages apparaîtront clairement à la lecture de la description qui suit, donnée à titre d'exemple par rapport aux figures annexées sur lesquelles :
- La figure 1 présente une vue de l'agencement d'un élément de rangement de pavillon montré en position d'utilisation suivant un premier mode de réalisation, depuis l'arrière de l'habitacle d'un véhicule, placé au-dessus du tendelet destiné à masquer le plancher de chargement, selon l'invention ;
- La figure 2 présente une vue en perspective de l'agencement d'un élément de rangement de pavillon montré en position déployée, dans une partie arrière de l'habitacle d'un véhicule, le casier de l'élément de rangement étant désolidarisé de son support, selon l'invention ;
- La figure 3 présente une vue en perspective de l'arrière de la structure porteuse constitutif de l'agencement d'un élément de rangement de pavillon montré en position déployée, dans une partie arrière de l'habitacle d'un véhicule, démuni de l'élément de rangement, selon l'invention ;

- Les figures 4a et 4b présentent une vue de dessous en perspective de l'agencement d'un casier d'un élément de rangement de pavillon montrant plusieurs modes de réalisations des moyens de guidage, selon l'invention ;
- La figure 5 présente une vue arrière en coupe A-A de la figure 2, de l'agencement d'un élément de rangement de pavillon montrant l'implantation des moyens effaçables permettant le blocage du casier sur sa structure porteuse, ou son débrayage pour engendrer son coulissement et/ou son extraction.

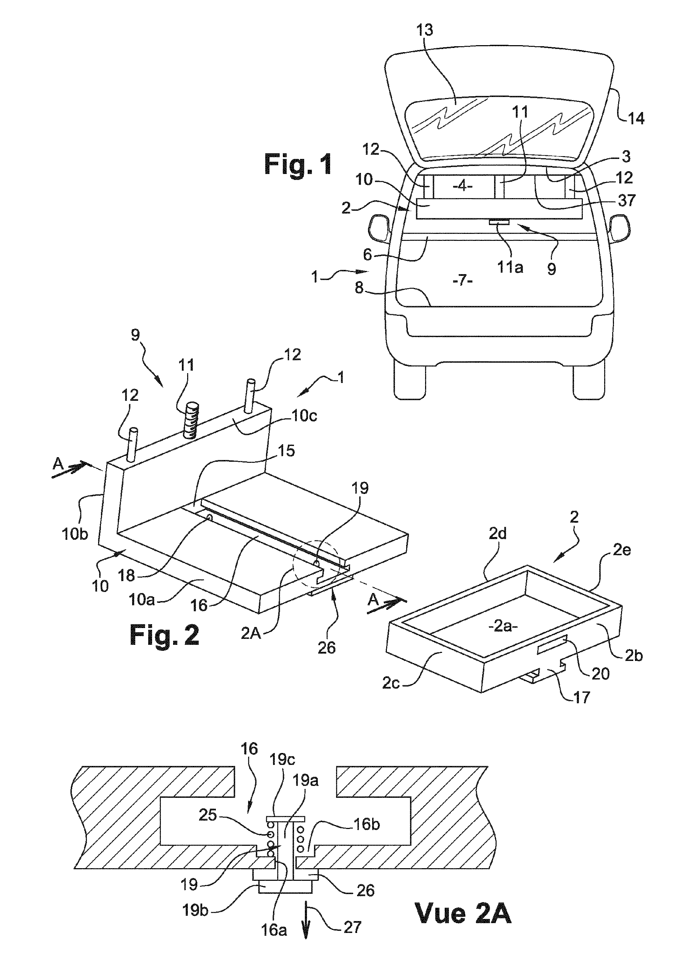

La figure 1 présente une vue de l'agencement 1 d'un élément de rangement 2 de pavillon 3 montrée en position d'utilisation suivant un premier mode de réalisation, depuis l'arrière de l'habitacle 4 d'un véhicule, placé au-dessus du tendelet 6 destiné à masquer l'espace de chargement 7 situé au-dessus du plancher 8, selon l'invention. Le hayon 14 du véhicule étant relevé, on voit que l'élément de rangement 2 est dans une position d'utilisation éloigné de la surface du pavillon 3, de manière qu'une personne puisse y accéder sans contrainte. L'élément de rangement 2 repose sur une structure porteuse 10 placée longitudinalement suivant l'axe du véhicule. La structure porteuse 10 sur laquelle repose l'élément de rangement 2, est actionnée par des moyens mécaniques rotatifs 9 constitués par une vis sans fin , en prise dans une noix 15 associée à la structure porteuse 10, permettant son déplacement d'une position où elle est accolée à la surface du pavillon 3 à une position basse où elle affleure à la surface du tendelet 6 et où elle est éloignée du pavillon 3 de manière à accéder aux objets stockés dans l'élément de rangement 2. Une butée 11a est prévue à l'extrémité inférieure de la vis sans fin 11 afin de limiter le déplacement de la structure porteuse 2. Au moins, un axe 12 de guidage monté parallèlement à la vis sans fin 11 empêche la rotation de la structure porteuse 10. La vis sans fin 11 et au moins un axe 12 sont fixés sur la traverse avant 37 de l'espace de chargement 7. Avantageusement, dans sa position de remisage la structure porteuse 10 supportant l'élément de rangement 2 ne réduit pas la visibilité de l'intérieur vers l'extérieur du véhicule par la lunette arrière 13, lorsque le hayon 14 est fermé.

La figure 2 présente une vue en perspective de l'agencement 1 d'un élément de rangement 2 et de sa structure porteuse 10 montré indépendamment du véhicule, l'élément de rangement 2 étant désolidarisé de sa structure porteuse 10. La structure porteuse 10 a la forme d'une équerre. L'élément de rangement 2 est placé sur la branche longue 10a, tandis que les moyens mécaniques rotatifs 9 de déplacement d'une position accolée au pavillon 3 (visible figure 1), à une position distante du pavillon 3, de la structure porteuse 10 sont intégrés sur la branche courte 10b et traversant dans la tranche 10c de ladite branche courte 10b. Les moyens mécaniques rotatifs 9 comprennent une vis sans fin 11 et une noix 15 associée à la structure porteuse 10. De plus, au moins un axe de guidage 12 de la structure porteuse 10, en translation et anti rotation est prévu parallèlement à la vis sans fin 11. La vis sans fin 11 et au moins un axe 12 sont guidés dans des alésages ménagés dans la tranche 10c de la structure porteuse 10. La noix 15 solidaire de la structure porteuse 10 permet de la manoeuvrer le long de la vis sans fin 11 de façon à la déplacer d'une extrémité de la vis sans fin 11 à son autre extrémité. La branche longue 6a de la structure porteuse 6 est munie d'une rainure en T 16. Cette rainure en T 16 est destinée à recevoir un tenon en T 17 de forme complémentaire solidaire du fond de l'élément de rangement 2. On comprend que la rainure en T 16 et le tenon en T 17 sont aptes à coopérer de manière à maintenir et à guider l'élément de rangement 2 sur la structure porteuse 10. L'élément de rangement 2 est un casier sensiblement carré, comportant un fond 2a et quatre bordures 2b, 2c, 2d, 2e, démuni de couvercle, bien qu'il pourrait en posséder un, et qui peut être désolidarisés complètement de la structure porteuse 10 pour plus de praticité. En outre, des pions 18, 19 effaçables sont prévus dans la rainure en T 16 pour bloquer le casier 2 dans sa position rangée sur la structure porteuse 10 et pour le maintenir dans sa position ouvert sans risque qu'il se désengage de la rainure en T 16. Pour déplacer le casier 2 ou le désolidariser de la structure porteuse 10, il convient d'effacer les pions 18, 19 qui sont en prise dans une rainure oblongue ménagée dans le tenon 17 (visible vue 2A). Une poignée 20 est prévue sur la bordure 2b du casier 2 de manière à le manoeuvrer en le tirant ou en le poussant sur la branche longue 10a de la structure porteuse 10. La vue agrandie 2A montre une section montrant l'architecture du pion 19, monté en saillie dans la rainure en T 16, le pion 19 comporte un fût 19a et une tête 19b à une extrémité et une butée d'arrêt 19c à l'autre extrémité. Le fut 19a est engagé dans un alésage 16a de la rainure 16, se prolongeant vers le haut par un lamage 16b de réception de l'extrémité d'un ressort de compression 25, tandis que l'autre extrémité est en appui sur la butée 19c du pion 19. En outre un actionneur 26 est prévu sous la tête 19b du pion 19 de manière à effacer la partie du pion 19 en saillie dans la rainure en T 16 dans le lamage 16b, en déplaçant le pion 19 suivant la flèche 27, afin de débloquer et ne pas entraver le coulissement du casier 2.

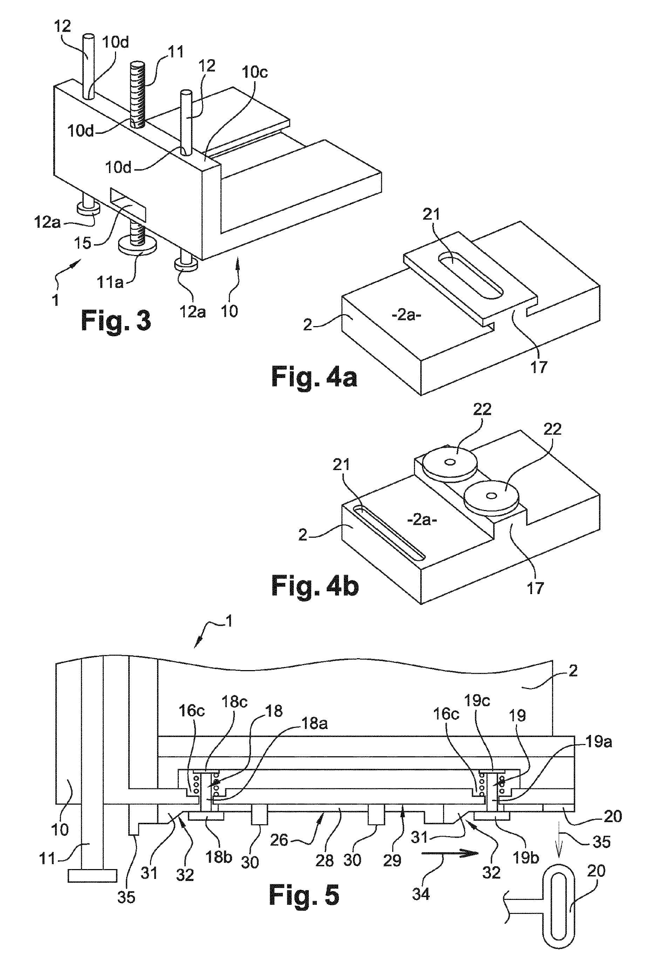

La figure 3 présente une vue perspective de arrière de la structure porteuse 10 constitutif de l'agencement 1 d'un élément de rangement 2 de pavillon montré en position déployé, dans une partie arrière de l'habitacle d'un véhicule, démuni de son élément de rangement 2, selon l'invention. Sur cette vue, la vis sans fin 11 et les axes 12 sont guidés dans des alésages 10d ménagés dans la tranche 10c de la structure porteuse 10. La vis sans fin 11 et les axes de guidages 12 sont fixés sur la traverse avant (non visible) Les axes 12 sont fixé tandis que la vis sans fin 11 peut être montée rotative et actionnée par une machine électrique ou alors la vis sans fin 11 est fixe et une noix 15 associée à la structure porteuse 10 est montée rotative. Des butées de fin de course 11a, 12a sont prévues à l'extrémité inférieure de la vis sans fin 11 et des axes de guidage 12.

Les figures 4a et 4b présentent une vue de dessous en perspective d'un élément de rangement 2 de pavillon montrant plusieurs modes de réalisations des moyens de guidage, selon l'invention. La figure 4a montre que le fond 2a du casier 2 comporte un tenon 17 placé sur sa médiatrice. Le tenon 17 peut être rapporté sur le fond 2a et assemblé par un moyen approprié connu de l'homme du métier ou venu directement de matière avec le fond 2a. Une rainure oblongue 21 est réalisée dans le tenon 17 afin de recevoir les pions 18, 19 (visible vue 2A) prévus dans la rainure en T 16 afin de bloquer le casier 2 dans la position souhaitée. Sur la figure 4b des galets 22 sont montés sur le tenon 17 remplaçant la branche horizontale du T de manière à obtenir un guidage fluide et agréable lors du déplacement du casier 2. Les pions 18, 19 (visible vue 2A) effaçables peuvent être alors disposés dans une rainure oblongue 21 ménagée, par exemple sur le bord du fond 2a du casier 2.

La figure 5 présente une vue arrière en coupe A-A de la figure 2, de l'agencement 1 d'un élément de rangement 2 (visible) de pavillon 3 (non visible) montrant l'implantation de l'actionneur des moyens effaçables 18, 19 permettant le blocage l'élément de rangement 2 sur sa structure porteuse 10 ou son débrayage pour engendrer son coulissement et/ou son extraction. L'actionneur 26 a la forme d'une tige 28 et comporte une surface plane 29 venant en appui sur le fond de la structure porteuse 10. La section courante de l'actionneur 26 à une forme sensiblement rectangulaire et il est maintenu en appui sur le fond de la structure porteuse 10 par des brides en U 30 dans lequel il peut coulisser librement. L'actionneur 26 est engagé sur le fût 18a, 19a du pion 18, 19 par l'intermédiaire d'une lumière 31 longitudinale ménagée dans l'actionneur 26. La tête 18b, 19b du pion 18, 19 reposant sur la face inférieure de l'actionneur 26. La surface inférieure de la tige 28 comporte des excroissances 32 se raccordant sur la section courante de ladite tige 28 en pente douce. De plus, la tige 28 se prolonge vers l'avant l'élément de rangement 2 par la poignée 20 dont la forme est visible sur la vue de dessous indiquée par la flèche 35. On comprend qu'une traction exercée sur la poignée 20 déplace la tige 28 suivant la flèche 34, la tête 18b, 19b du pion 18, 19 s'engageant sur l'excroissance 32. Ce qui a pour effet d'exercer une traction sur la tête 18b, 19b du pion 18, 19 dont l'autre extrémité comportant la butée 18c, 19c vient se loger dans le lamage 16b. De cette manière, l'élément de rangement 2 est libéré et peut coulisser librement, l'effacement des pions 18, 19 peut s'effectuer en deux étapes, le pion 18 peut s'effacer dans une première étape, pour obtenir le coulissement l'élément de rangement 2 sur la structure porteuse 10 pour accéder aisément à l'intérieur l'élément de rangement 2 jusqu'à venir en butée sur le pion 19 et pour être extrait de la structure porteuse 10 dans une deuxième étape, il suffit de tirer une nouvelle fois sur la poignée 20, pour effacer le pion 19. Le pion 18 venant en butée sur le talon 35 de l'actionneur pour stopper sa course. L'actionneur 26 n'interfère pas avec la vis sans fin 11 et n'entrave pas son fonctionnement.

## Revendications

1. Agencement (1) d'un élément de rangement (2) supporté par une structure porteuse (10) sous un pavillon (3), et au-dessus du plancher (8) de chargement de l'habitacle (4) d'un véhicule, et pour l'accès au dit élément (2) au moins une face par laquelle un utilisateur peut parvenir à l'intérieur dudit élément de rangement (2), **caractérisé en ce que** la structure porteuse (10) est mobile entre une position où elle est accolée au pavillon à une autre position où elle est distante dudit pavillon par des moyens mécaniques rotatifs (9).

2. Agencement selon la revendication 1, **caractérisé en ce que** la structure porteuse (10) est mobile par des moyens mécaniques rotatifs (9) constitués d'une vis sans fin (11) et d'une noix (15) intégrée dans la structure porteuse (10).

3. Agencement selon l'une des revendications 1 ou 2, **caractérisé en ce que** la structure porteuse (10) est accompagnée au moins par un axe (12) de guidage montés parallèlement aux moyens rotatifs (9).

4. Agencement selon la revendication 2, **caractérisé en ce que** la vis sans fin (11) est fixée sur la traverse (37) avant de l'espace de chargement (7).

5. Agencement selon l'une quelconque des revendications 2 ou 4, **caractérisé en ce que** la vis sans fin (11) est montée rotative et la noix (15) est fixe.

6. Agencement selon l'une quelconque des revendications 2 ou 4, **caractérisé en ce que** la vis sans fin (11) est fixe et la noix (15) est montée rotative sur la structure porteuse (10).

7. Agencement selon l'une quelconque des revendications 5 ou 6, **caractérisé en ce que** la vis sans fin (11) ou la noix (15) sont mis en rotation par une machine électrique.

8. Agencement selon l'une quelconque des revendications 1 à 3, **caractérisé en ce que** la structure porteuse (10) comporte au moins un alésage (10d) dans la tranche (10c) de sa branche courte (10b) pour permettre le passage d'au moins d'un axe (12) de guidage.

9. Agencement selon l'une quelconque des revendications 1 à 4, **caractérisé en ce que** la structure porteuse (10) comporte sur sa branche longue (10a) une rainure en T (16) apte à coopérer avec un tenon (17) correspondant façonné sur le fond (2a) de l'élément de rangement (2).

10. Agencement selon l'une quelconque des revendications 1 à 4, **caractérisé en ce que** la structure porteuse (10) comporte sur sa branche longue (10a) un guide rainuré en T (16), apte à coopérer avec un tenon (17) surmontée de roue de guidage (22), montée sur le fond de l'élément de rangement (2).
